# EUROPEAN PATENT APPLICATION

(11) **EP 4 227 233 A2**
(43) Date of publication of application: **16.08.2023**
(21) Application number: 21819242.5
(22) Date of filing: 11.10.2021
(51) Int. Cl.: B65D 1/20, B65D 83/04, A47J 31/00

(54) **SYSTEMS AND PROCESSES FOR COFFEE DISTRIBUTION INCLUDING COFFEE SUPPLY CONTAINERS**

(30) Priority: 12.10.2020 PT 2020116817
(71) Applicant: Novadelta - Comércio e Indústria de Cafés, Unipessoal Lda, 1950-041 Lisboa (PT)
(72) Inventor: NABEIRO, Rui Miguel, 7370-112 Campo Maior (PT)
(74) Representative: Ferreira Pinto, Francisca
(86) International application number: PCT/PT2021/050032
(87) International publication number: WO 2022/081029

(57) **Abstract**

The present invention relates to systems and processes for distributing coffee to a plurality of consumption locations (A) where the supply of roast and ground coffee beans to beverage preparation apparatus, including espresso coffee and similar, is required. In particular, the systems include reusable supply containers (3) for collecting a quantity of coffee beans or substance derived therefrom, and adapted so that can be remotely operated in discharge relative to beverage preparation apparatus.

The supply containers (3) can be associated with respective displacement means (30) so that can be moved off-board from a transport vehicle (1), and vice versa, as well as can be moved into a discharge operative position (I) that can be connected to discharge means (7), and vice versa.

## Description

### Field of Invention

The present invention relates to the field of coffee distribution systems and processes to a plurality of locations where beverage preparation apparatus, such as espresso and other coffee-based drinks, are operated.

### Background of the Invention

The distribution of coffee beans to consumption locations where beverage preparation apparatuses are operated on the basis of roasted and ground coffee beans is known. Such apparatuses are operated on the basis of containers that supply the said roast and ground coffee beans, either manually, for example through discharge to filter-holder apparatuses, or automatically, for beverage extraction apparatus. Such containers are often provided associated with at least one roasting means and grinding means.

Examples of containers for distribution coffee beans up to such distribution containers are known.

The document US 7,074,443 B2 discloses a package for containing roasted and ground coffee beans under atmospheric pressure.

The documents WO 2009/224653 A1 and WO 2018/106631 A1 disclose packaging systems for providing roast and ground coffee beans. In the first case, it is a package with a circular cross section provided in a rigid material, while in the second case, it is a package with a rectangular cross section and provided in a flexible material.

In any case, it is also known that the supply of coffee beans, being a granular type medium, is usually distributed to consumption locations in bag-type packages, that in the case of roasted coffee beans are usually sealed in inert atmospheres in order to minimize the degradation of the properties of the coffee beans. Furthermore, to facilitate the handling of coffee beans bags, they are usually provided relatively small, for example 1 kg in weight, and are grouped in cartons that are in turn arranged on pallets.

Furthermore, it is essential to ensure a barrier to transmission of ultraviolet radiation and the transfer of water vapour and oxygen, whereby usually said coffee beans bags are provided in relatively expensive materials, for example composite materials, and difficult to dispose of or recycling. This requirement requires the use of materials that are relatively expensive, and whose disposal entails significant environmental costs.

In addition to coffee bean distribution containers, and as mentioned above, coffee bean supply containers are known for roasting and/or grinding means associated with beverage preparation apparatus at consumption locations. This type of supply containers is usually configured so that can be releasably retained in said roasting and/or grinding means. In particular, these supply containers have relatively small dimensions and the supply of coffee beans takes place in a gravitational way. Examples of supply containers adapted so that can collect coffee beans and operate with roasting means and/or grinding means at consumption locations are disclosed by the documents EP 2344013 B1, EP 2653082 B1.

The prior art includes various solutions relating to systems and processes for distributing coffee beans to a plurality of consumption locations. The still most common solution is to use coffee bean containers that are small in size and can be manipulated by hand.

### Brief Description of the Invention

The objective of the present invention is to provide systems and processes for the distribution of coffee beans or substances derived therefrom, from at least one supply location and to a plurality of consumption locations geographically distanced apart from each other, said systems and processes being more efficient in terms of energy and material use, including with a substantial reduction in the amount of packaging materials and transport energy, in particular per unit weight of product distributed.

This reduction of packaging material is relevant because the transport of coffee beans requires materials with barrier properties to ultraviolet transmission and transfer of water vapour or oxygen, and these are materials that are difficult to recycle or dispose of by composting, as well as relatively expensive materials.

A first objective is to provide supply containers that reduce the amount of packaging material used, simplify the handling of discharge operations, as well as improve the operability of such containers at consumption locations, thereby reducing the associated operating costs.

This objective is accomplished according to the present invention through a system according to claim 1.

The system may include a supply container adapted so that can be refilled multiple times *ex situ* and so that can be provided in an operative position *in situ* where it can be operated in discharge, and wherein a passage is releasably connectable to discharge means that provide discharge connection of the supply container remotely with respect to a beverage preparation apparatus.

In particular, the objective is achieved through a system that includes reusable supply containers adapted so that can collect coffee beans with advantageous characteristic dimensions and that can be operated remotely with respect to a beverage preparation apparatus.

The supply containers can present a collection volume of between 0.005 and 0.1 m³, preferentially of between 0.01 and 0.05 m3.

The supply containers can present at least one characteristic dimension greater than 20 cm and less than 1.5 m, preferentially greater than 30 cm and less than 90 cm.

The supply containers can be transported to a consumption location and can be operated to discharge the entire respective quantity of coffee beans at this consumption location.

In particular, the supply containers can be adapted so that can supply coffee beans to at least one of coffee beans roasting and grinding means that can be operatively associated with beverage preparation apparatus.

The discharge connection from the supply containers downstream of these can be carried out in a conduct connection gas-sealed with respect to the outside, so that the coffee beans are not exposed to the external environment.

Alternatively, or in addition, the supply containers can supply coffee beans to feeding containers provided upstream of the coffee bean roasting and/or grinding means, said supply containers having a smaller collection volume than the supply containers, and both of said types of containers being adapted for multiple uses.

The load to be collected in the supply container can be green coffee beans or roasted coffee beans, or a derivative substance such as a coffee beverage extract. In particular, the coffee beans are collected in a continuous volume of the container that can collect the load under conditions of inert gas atmosphere and/or under pressure, so as to preserve the organoleptic properties thereof over time.

Examples of consumption locations include places of public consumption, such as cafes and restaurants, that include one or more beverage preparation systems, and places of private consumption.

In said consumption locations there is at least one, possibly a plurality of beverage preparation devices operable with roast and ground coffee beans or substance derived thereof, such as espresso coffee and similar.

The beverage preparation apparatus may include a beverage preparation machine adapted so that can perform extraction cycles of an individual portion of the roast and ground coffee beans.

The beverage preparation apparatus may further comprise means for supplying pressurized and heated fluid, in flow connection with a beverage preparation device.

The beverage preparation apparatus can further comprise at least one of: coffee bean roasting means and coffee bean grinding means, provided in supply connection to beverage preparation devices that discharge beverage into a drinking container.

The coffee beans roasting means can be associated with a container that can be provided in flow connection upstream of the grinding means of coffee beans.

The grinding means of coffee beans can be remotely arranged with respect to the beverage preparation apparatus, so that the feeding of ground coffee beans to the beverage preparation apparatus is done manually. Examples of this type of beverage preparation apparatus, including for example espresso-type coffee preparation machines and similar beverages, operable on the basis of coffee beans grinders that can be operated with filter holders also operable as beverage preparation devices, are known in the state of the art, so that a more detailed description thereof is waived.

Alternatively, the grinding means of coffee beans can be associated in direct flow connection with the beverage preparation device so that the supply of ground coffee beans to the latter is by means of a conduct-type connection, or similar.

An associated objective of the present invention is to provide supply containers with the possibility of traceability in the course of distribution, and of better discharge operation.

In particular, the objective above is solved according to the present invention by means of a supply container adapted so that can be uniquely identified, at least in an operative position of discharge where it can supply a beverage preparation apparatus, in particular in a remote operative position with respect to said beverage preparation apparatus.

The supply container can present or be associated with at least one of:
- information means including a unique identification of the container and adapted so that at least this information can be automatically apprehended and communicated to proximity data means,
   and
- data means adapted so that can be automatically functionally connected with proximity data means,
so that the container can be uniquely traced at least during its presence at the consumption location.

It is preferred when the supply container can be further uniquely tracked in at least one of: along the delivery path to a consumption location, and along the return path to a supply location, in particular via functional data connection with proximity data means.

The supply container can be adapted so that a respective unique identification can be automatically apprehended, if correctly disposed in the operative discharge position, in particular with the information means oriented towards first apprehension means operably connected to proximity data means.

The supply container can be adapted so that data relating to at least one parameter associated with at least one of: unique identification of the container, distribution to a consumption location, presence at a place of consumption and operation of the discharge container, can be exchanged by data means in operative connection with proximity data means.

The supply container can present identification means associated with the casing thereof, and further including at least one of: container type, nominal charge amount, coffee type, the identification means may preferentially be provided encoded, including in the form of alphanumeric symbols or graphics, and so that can be automatically apprehended by contact apprehension means, such as electrical connection means, or by contactless apprehension means, such as by electronic image acquisition and processing means.

The supply container can be associated with data means adapted so that can communicate time-varying data associated with at least one of: coffee origin, consumption location of destination, presence in operative discharge position, passageway condition open or closed, passageway connection to discharge means, period of actuation of flow regulating device associated with passageway of container.

The supply container may be associated with data means provided so that can exchange data with at least one of: data means of other supply containers that are within a proximity radius, including within a radius of at least 10 m, preferentially within a radius of at least 20 m, proximity data means, including associated with beverage preparation apparatus, in particular those within a proximity radius, including within a radius of at least 10 m, preferentially within a radius of at least 40 m; and remote data means.

It is preferred when said functional connection can be established in case of reciprocal validation of functional connection, for example of the "hand-shake" type or similar.

The supply container may be associated with data means including data communication means by means of at least one of: wired connections and wireless connections, and that may further present at least one of: data encoding means, data processing means. It is preferred when the supply container can be associated with data means adapted so that can communicate over wireless connections, including short-range data connections, such as WI-FI and similar.

The supply container can be associated with data means configured so that can automatically detect the presence of different types of proximity data means if they are within respective perimeters of proximity to them.

The supply container can be associated with data means that can be functionally associated with a user interface, for example of the type buttons, digital screen or the like, adapted so that can provide at least one of: type designation and characteristics of the content, reading of quantity and conditions inside the container, local designation of consumption, indication of data connection status.

The supply container may have at least one of: energy generating means, for example in the form of photovoltaic means, and energy storage means, for example in the form of electric energy batteries, said energy storage means can be provided so that y can supply at least the data means, preferentially so that can operate for at least 48 hours, preferentially at least 72 hours without connection to an external power source.

A related objective of the present invention is to provide a process for distributing coffee to a plurality of geographically distant consumption locations in conditions of better conservation of the quality of the coffee beans in storage and better operating efficiency at the consumption locations.

This objective is solved according to the present invention by means of a distribution process according to claim 11.

The process can be carried out with a system according to any one of claims 1 to 10.

In particular, the objective above is solved by means of a process comprising successive cycles whereby a supply container can be placed in at least one of: different consumption locations and different operative discharge positions at a consumption location, in different distribution cycles.

The process may include a plurality of distribution cycles between a supply location and geographically distanced consumption locations, each cycle including the transport of a supply container by a transport vehicle with respective means of displacement, up to at least one, or up to a plurality of consumption locations, discharge a certain number of supply containers at each consumption location, and return the containers again to a supply location to refill them, and start a new cycle.

The process may include a plurality of transport and supply operations of coffee from the supply location to at least one of: roasting means and grinding means at consumption locations, including loading coffee beans into container, discharging the coffee beans from the container, and supplying the coffee beans to at least one of: means for roasting and grinding the coffee beans, and in all said steps, respective storage periods and transitions between containers, the coffee beans are kept in sealed conditions to the ambient atmosphere.

The process may include successive cycles of distribution of a load of coffee beans, or substance derived thereof, into supply containers presenting data means, each cycle including the following successive steps:
- loading a container at a supply location;
- transporting the supply container in the transport vehicle presenting proximity data means to a first consumption location;
- moving the container to an operative discharge position indoors of the consumption location;
- operating the container in discharge at the consumption location where data means are located in the proximity, for example also functionally connected to a beverage preparation apparatus;
- transporting the container to a supply location.

The process may include offloading the supply container out of the transport vehicle, this offloading being carried out by means of at least one of: discharge means and displacement means that can be associated with the container, and not in a manual manner only.

It is preferred when the container periodically communicates with remote data means, including via proximity data means, for the entire duration of each cycle.

In particular, at least moving and operating the supply container at a consumption location, preferentially also transport to a consumption location, includes automatically establishing a functional connection, preferentially by wireless network, between container and proximity data means that are within a previously defined proximity perimeter of the container and that present valid communication credentials, for example via "hand-shake" protocol or similar.

Periodic communication between containers and remote data means may include communicating a unique identification of the container and a unique identification of the proximity data means with which it is paired with at any given time.

The operation of discharging the supply container may include at least two of the following steps:
- apprehending at least one data associated with information means configured so that that can be apprehended automatically, for example a unique identification associated with the supply container;
- establishing a functional connection between proximity data means associated with a beverage preparation apparatus and energy means associated with discharging means;
- actuating discharge means in order to discharge a quantity of coffee beans, or substance derived thereof.

The operation of discharging the supply container from a passageway thereof may include at least one of:
- regulated actuation of discharge means and energy means connected to the passageway by proximity data means,
- regulated actuation by data means of a flow regulating apparatus retained in the passageway, in accordance with data received by proximity data means;
- discharging measured quantities of coffee, including depending on requests obtained by the proximity data means, for example portions of roasted and ground coffee beans, for example from 4 to 12 g, preferentially from 5 to 10 g, to be fed to a beverage preparation device.

### Description of the Figures

The invention will be explained in greater detail below on the basis of preferred embodiments and the attached Figures.

The Figures show embodiments of the present invention, in simplified schematic representations:
- Figure 1:: a first embodiment of a transport vehicle (1) and a supply container (3) according to the present invention;
- Figure 2:: a second embodiment of a transport vehicle (1) and a supply container (3);
- Figure 3:: a third embodiment of a transport vehicle (1) and a supply container (3);
- Figure 4:: an embodiment of a supply container (3) with respective displacement means (30);
- Figure 5:: schematic diagram of a first embodiment of system according to the present invention;
- Figure 6:: schematic diagram of a second embodiment of system in accordance with the present invention;
- Figure 7:: a perspective view of an embodiment of a supply container (3);
- Figure 8:: a perspective view of another embodiment of a supply container (3);
- Figure 9:: a side sectional view of a supply container (3) ;
- Figure 10:: a side sectional view of another supply container (3);
- Figure 11:: a side elevation view of an embodiment of a supply container (3);
- Figure 12:: a side elevation view of different types of supply containers (3, 3');
- Figure 13:: a side view of an embodiment of displacement means (30) associated with the supply container (3), in a first mode of operation thereof;
- Figure 14:: a side view of an embodiment of displacement means (30) associated with the supply container (3), in a second mode of operation thereof;
- Figure 15:: a first way of operating a supply container (3) connected to discharge means (7);
- Figure 16:: a second way of operating a supply container (3) connected to discharge means (7);
- Figure 17:: first functional form of data communications in a system in accordance with the present invention;
- Figure 18:: a first embodiment of a coffee distribution process according to the present invention;
- Figure 19:: second functional form of data communications in a system in accordance with the present invention;
- Figure 20:: a second embodiment of coffee distribution process.
- Figure 21:: a third embodiment of coffee distribution process;
- Figure 22:: a fourth embodiment of coffee distribution process.

### Description of preferred embodiments of the invention

The present invention will be described based on embodiments with consumption locations (A) that include beverage preparation apparatus based on roast and ground coffee beans, for example espresso coffee and similar. In this case, it is necessary to supply coffee beans for roasting and grinding *in situ* at the consumption locations (A), or coffee beans previously roasted *ex situ,* and for grinding *in situ* at the consumption location(A).

The aforementioned consumption locations (A) are geographically distanced from each other.

Systems and processes for distributing coffee include the use of supply containers (3) adapted so that can be refilled multiple times *ex situ,* at a supply location (B), and so that can be moved by displacement means (30) to an operative discharge position (I) indoors of consumption locations (A), wherein a passageway (31) of the supply container (3) can be releasably connected to discharge means (7) providing connection of the supply container (3) remotely with respect to the beverage preparation apparatus, and that can be operated in discharge.

Said supply container (3) is thus configured so that can be reused in a plurality of distributing cycles between a supply location (B), where the supply container (3) is loaded, and at least one or a plurality of consumption locations (A) geographically distanced from each other, where coffee beans are discharged.

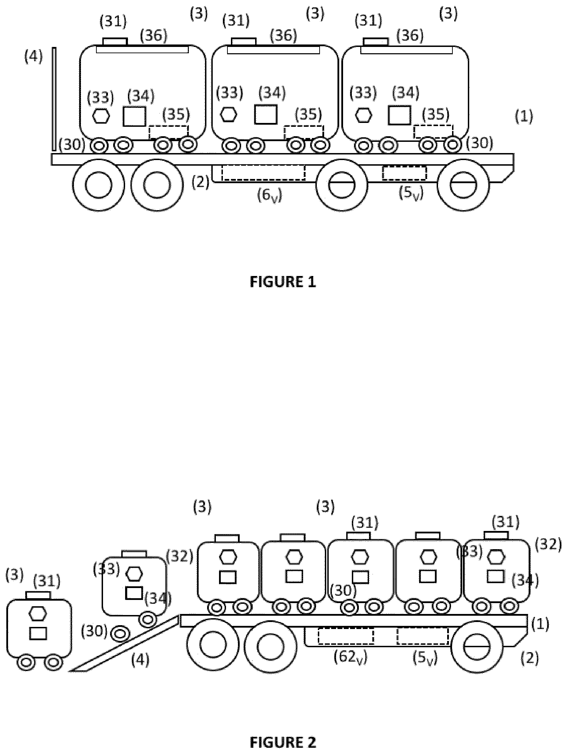

Figure 1 represents a transport vehicle (1), in this case a freight truck type of vehicle, that includes displacement means (2), in this case an engine operatively connected to a wheel train, and adapted so that can transport a plurality of reusable supply containers (3) presenting a passageway (31) provided in the container casing (32) and adapted for connecting to discharge means (7) available at the consumption location (A) - as shall be described in more detail further below.

The supply container (3) can present a casing (32) with a general tubular-like shape, for example a cylindrical type, or a general shell-like shape, for example parallelepiped or partially spherical, that encloses a collection volume adapted for the collection of a flowable substance, said casing (32) being adapted so that can provide a barrier to ultraviolet transmission and water vapour transfer and oxygen transfer to the interior.

According to a particular aspect of the present invention, the supply container (3) is configured so that can present, or can be associated with, detachably or only under load, respective displacement means (30) configured so that can be retained, preferentially detachably, to a respective supply container (3).

Taking into account their relative size and weight, the supply containers (3) can be moved with the support of said displacement means (30).

In the case of the embodiments shown in Figures 1 and 2, the supply containers (3) can thus be moved, by said displacement means (30), on-board and off-board of the transport vehicle (1), as well as indoors of a consumption location (A), or other locations.

The transport vehicle (1) can be associated with discharge means (4), for example of the ramp or lifting platform type, adapted so that can provide the loading and discharging of the supply containers (3) individually or in groups of numbers of maximum 6, preferentially maximum 4.

The transport vehicle (1) can also present proximity data means (5v) adapted so that can regulate the operation of at least one of: the displacement means (2) and discharge means (4), and operate in connection data with remote data means (20).

The data means (5_{V}) and the power means (6_{V}) of the vehicle are advantageously adapted so that can provide propulsion autonomy and data communication to the transport vehicle (1), whereby this is preferentially an autonomous vehicle capable of visiting each consumption location (A) and operating the discharging of the supply containers (3) without direct human intervention.

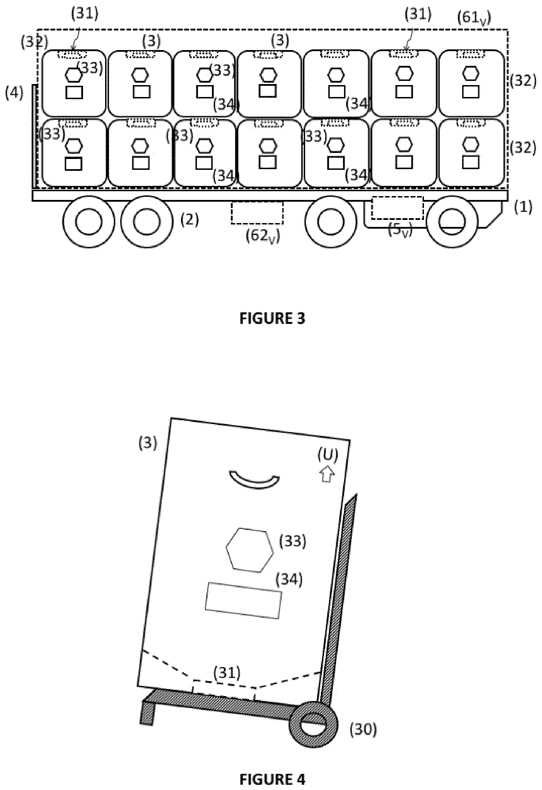

In the case of the embodiment shown in Figures 3 and 4, the supply containers (3) are adapted so that can be stacked and transported in transport vehicles (1) in stacks of at most 4, preferentially at most 3 in height.

The supply containers (3) can in this case be moved out and transported indoors of a consumption location (A) by means of manually actuated displacement means (30), for example of the wheelbarrow type, or similar, as shown in Figure 4.

As further depicted in Figure 4, the supply containers (3) may also present handles configured so as to provide the possibility of manual handling thereof.

The supply containers (3) can present a square or hexagonal cross section, so that can minimize the free space between them when arranged next to each other.

The transport vehicle (1) can present energy generation means (61v), for example of the photovoltaic type, and energy storage means (62v), for example of the electric battery type, adapted so that can supply at least one of: the displacement means (2) and the discharge means (4).

The transport vehicle (1) and its displacement means (2) can be provided so that can successively visit a plurality of consumption locations (A) and thereby supply a certain number of supply containers (3) to each of these.

The supply container (3) may present information means (33) including a unique ID of said supply container (3).

The information means (33) may further include data relating to the type of coffee, its origin and production, as well as a unique identification of the supply container (3). This data can be configured in alphanumeric form and/or in graphical code form adapted so that can be grasped automatically, for example by optically readable means.

According to a particular aspect of the present invention, the supply container (3) may present data means (34) adapted so that can communicate unique data from the supply container (3), for example data associated with at least one of: ID and georeference thereof, to at least one of: near data means (5V) and remote data means (20).

As depicted in Figure 4, said displacement means (30) can be provided as a standard loading device, for example of a load trolley type, or the like, that can be manually pushed and that can be used for moving other loads.

The supply containers (3) can be configured so that present an upward direction (U) and must be handled, preferentially also transported, at least approximately in that position.

The supply containers (3) can have a base region with a raised area in order to facilitate their transport.

As will be understood by the reader, the supply container (3) is provided with such dimensions and nominal weight when full, that in general the movement of the supply container (3) out of the transport vehicle (1) can only, or can be greatly facilitated if performed using at least one of: discharge means (4) and displacement means (30) that can be associated with the supply container (3), and not manually only.

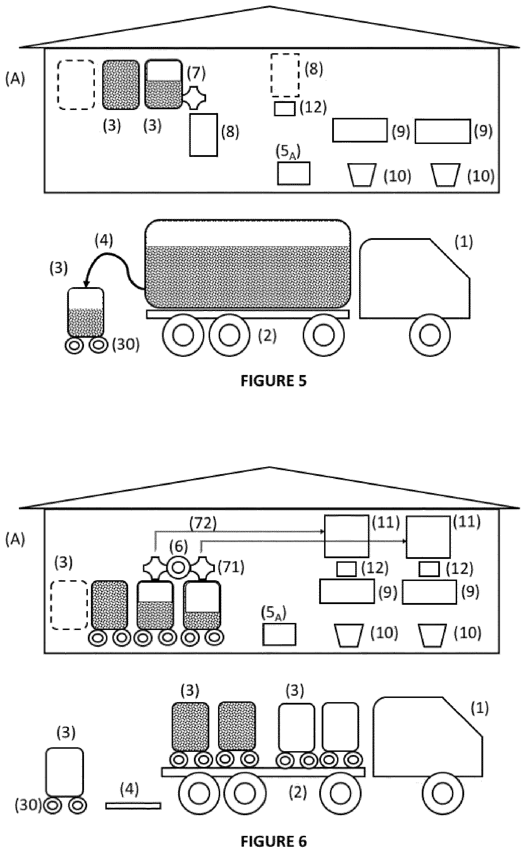

Figures 5 and 6 represent schematic diagrams of operation according to the invention.

The consumption locations (A) present at least one beverage preparation apparatus including processing means of coffee beans, namely at least one of: roasting means (11) and grinding means (12), so that can supply roasted and ground coffee beans, and at least one beverage preparation apparatus including at least one beverage preparation device (9) operable with roasted and ground coffee beans.

The beverage preparation apparatus may include means for supplying a flow of water heated to at least 80°C, preferentially at least 90°C, and at a flow pressure of at least 5 bar, preferentially at least 10 bar.

As shown in Figure 5, the dispensing process may include discharging coffee beans from a distribution container, of the cistern or similar type, on-board of a transport vehicle (1), to supply containers (3) that can be moved outdoors for this purpose.

The supply containers (3) can be moved indoors by displacement means (30) and arranged in an operative discharge position (I) where they are above the beverage preparation device (9).

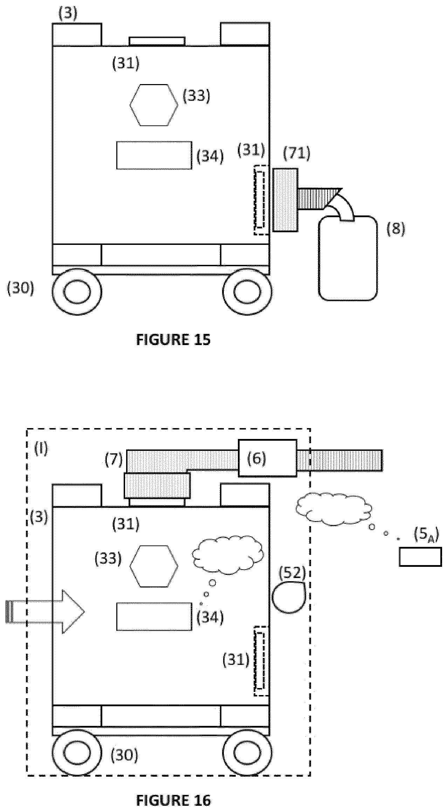

The discharge can be carried out by discharge means (7), in particular of the tap or discharge valve type, and operating the discharge by the force of gravity, as schematically represented in Figure 15, to a supply container (3) that presents a smaller collection volume than the supply container (3) and that can be manually engaged in direct supply connection, for example by means of the action of gravity only, with at least one of said roasting and grinding means (11, 12).

The discharge from the supply container (3) can be regulated manually.

In the case of the embodiment shown in Figure 6, the distribution process includes delivering full supply containers (3) to each consumption locations (A), and collecting others that are empty, in order to return these to a supply location (B).

Said supply containers (3) are then moved indoors of the consumption location(A) to a storage position or moved to an operative discharge position (I) where the discharge passageway (31b) is connected to discharge means (7), for example of the flow duct type actuated by impulse means, for example pneumatic, actuated by power means (6), as shown in more detail in Figure 16.

The discharge can be regulated by proximity data means (5A) associated in this case with a beverage preparation apparatus.

According to one aspect of the present invention, both this and all other transfer operations of coffee beans from a first to a second container can be carried out through a sealed connection to the outside atmosphere, so that the coffee beans are never directly exposed to it until reaching a beverage preparation device (9) .

According to an aspect of the present invention, the coffee distributing process, in particular the steps of transporting the supply container (3), discharging the coffee beans at each consumption location (A), including moving the supply container (3), it can be performed semi-automatically with reduced human intervention, or automatically without direct human intervention, and under the monitoring of remote data means (20), as will be explained further below.

The supply container (3) can be configured so that can be placed in an operative discharge position (I) where a passageway (31) can be connected to discharge means (7), preferentially by means of removable engagement, the discharge means (7) comprising at least one of: actionable discharge device (71), for example discharge tap or valve, and discharge connection (72), for example of the flow duct type.

The supply container (3) can be configured so that its correct disposition in the operative discharge position (I) can be apprehended by automatic means, for example optical, whereby the supply container (3) and discharge means (7) are preferentially configured so that in the operative discharge position (I) they can be switched on semi-automatically, or automatically, without requiring the use of a tool, preferentially without requiring manual intervention for this purpose.

The supply container (3) can be configured so that can be placed in an operative discharge position (I) where at least one of the following conditions is met:
- a reference axis (X₃₁), for example of symmetry, of passageway (31) is aligned with a reference axis, for example of symmetry, of the discharge means (7);
- the supply container (3) is at least partially collected within a collection arrangement for at least one supply container (3);
- the supply container (3) is supported at least in a perimeter region of a container face different from the passageway (31);
- the supply container (3) is supported by respective displacement means (30).

The supply container (3) can be configured so that can be placed, preferentially retained, in the operative discharge position (I) so that the passageway (31) can be connected to discharge means (7), whereby said operative discharge position (I) corresponds to at least one of:
- in the vicinity of and in connection with the coffee beans discharge upstream of at least one of: roasting means (11), grinding means (12) and beverage preparation device (9) associated with beverage preparation apparatus that can be operated with roasted and ground coffee beans;
- a level in the vicinity or similar to the floor level or ceiling level of the consumption location (A);
- a higher or similar level, preferentially at a lower level than the extraction device (9) of the beverage preparation apparatus;
- a position where at least the majority of the volume of the supply container (3) is collected within a collection arrangement thereof,
whereby the supply container (3) is preferentially configured with a front face (F) that faces away from a supply container (3) in the operative discharge position (I).

The supply container (3) can be configured so that a passageway (31) can be placed in the operative discharge position (I), in particular at least in proximity to, preferentially aligned with, discharge means (7), through a movement in a direction generally transverse to the direction of the force of gravity, the passageway (31) being able to be provided in connection gear with the discharge means (7) through a movement in at least one of: a transverse direction and a direction similar to the direction of the force of gravity.

The system may further comprise at least one of: supply means (8), roasting means (11) and grinding means (12) of coffee beans, that may be provided in discharge connection of coffee beans downstream of the supply container (3).

The supply container (3) can be adapted so that can supply coffee beans, or substance derived therefrom, preferentially through outlet connections sealed to the outside atmosphere, to at least one of:
- power means (6) having a collection volume smaller than the supply container (3) and adapted so that can be operatively connected directly to at least one of: roasting means (11) and grinding means (12) of coffee beans, and
- at least one of: roasting means (11) and grinding means (12) of coffee beans,
provided in the supply connection to an extraction device (9) operable in cycles on the basis of an amount of roast and ground coffee beans and a quantity of pressurized and heated flow, so that roasted and ground coffee beans can be supplied automatically or manually to an extraction device (9) and the resulting beverage discharged therefrom, for example into a drinking recipient (10).

The discharge means (7) can be associated with the consumption location (A), preferentially with a beverage preparation apparatus, whereby it is preferred when its operation can be regulated by at least one of: data means (5) associated with a beverage preparation apparatus at the consumption location(A) and remote data means (20).

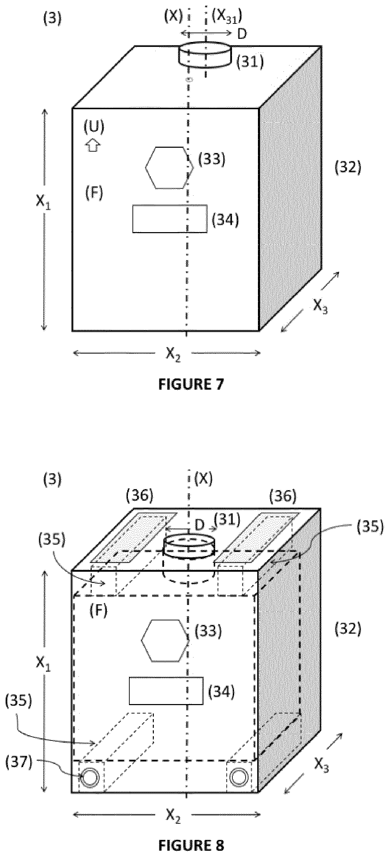

Figures 7 to 12 represent preferred embodiments of the supply container (3).

In fully loaded condition, the supply container (3) can have, a weight of at least 10 kg, preferentially at least 25 kg, particularly preferentially at least 40 kg, and at most 250 kg, of a preferentially at most 130 kg, particularly preferentially at most 75 kg.

In particular, according to a particular aspect of the present invention, the supply container (3) can present a continuous collection volume adapted so that can collect at least 0.005 m³, preferentially at least 0.5 m³ of coffee beans, or substance derived from thereof.

The supply container (3) can be configured with a general hexagonal parallelepiped shape, or the like, with a base region of at least 0.05 m², preferentially of at least 0.01 m².

Furthermore, the supply container (3) may present characteristic dimensions, the smallest of which may be larger than 0.3 m, preferentially larger than 0.5 m, and the largest of which may be smaller than 1.5 m, preferentially smaller than 1.2 m.

The supply container (3) can present at least one of: a first dimension (X₁), for example height, and a second dimension (X₂), for example width, greater than 0.3 m, preferentially greater than 0. 4 m, and less than 1.5 m, preferentially less than 0.8 m.

The supply container (3) can present a second and third dimensions (X₂, X₃), transversal to the direction of gravity force, similar.

As shown in Figure 7, the supply container (3) can present a passageway (31) of circular section, arranged on a top face.

The passageway (31) can be arranged on a face of the casing (32) offset with respect to a respective reference axis, preferentially on the top face and offset with respect to the central axis (X) of the supply container (3).

The passageway (31) can present a characteristic dimension (D_{b}), for example diameter.

The supply container (3) can be configured so that presents an upward side (U), in particular an upwardly oriented top face, where the passageway (31) is located, so that should always be manipulated in this position.

In addition, the supply container (3) can present a front face (F) that corresponds to a side face thereof and that must always be oriented outwards, to a side accessible by a user, with respect to an operative discharge position (I).

It is preferred when information means (33) and data means (34) are provided on said front face (F).

According to a particular aspect of the present invention, the supply container (3) can present data means (34) adapted so that can exchange data, preferentially by wireless communications, with proximity data means (5) if and while in a previously defined region of proximity with respect to these, preferentially based on reciprocal validation protocols, and through these, with remote data means (20).

The data means (34) can include means for apprehending data, for example geo-referencing, and means for exchanging data, in particular by wireless communication, for example of the WIFI type or the like.

The data means (34) can include data processing means based on the apprehended data.

Furthermore, the data means (34) may further include data display means, for example of the digital screen type, data input means, for example of the keyboard type, or other type of user interfaces.

According to the embodiment of Figure 8, the supply containers (3) can further include energy storage means (35), for example electric energy batteries, and energy generating means (36), for example photovoltaic, provided in operative connection with the energy storage means (35).

Furthermore, the supply containers (3) may include means for connecting external energy (37) to external energy sources, so that may enable charging of at least part of said energy storage means (35).

It is preferred when the energy storage means (35) are dimensioned so that can match the energy demand by the data means (34) for at least the majority, preferentially the entirety of a distribution cycle between the exit and return of the supply container (3) from a supply location (B).

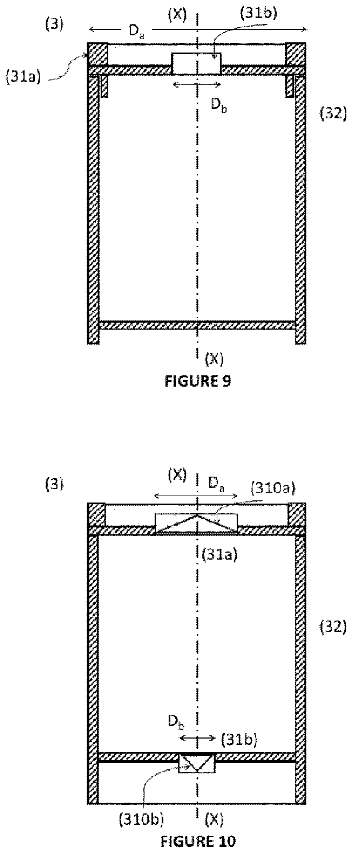

As shown in Figures 9 to 12, the supply containers (3) can present at least two types of passageways (31a, 31b) in the casing (32), adapted for loading and discharging the same, and with at least one of: different relative position and different characteristic dimension (Dₐ, D_{b}), whereby both types of passageways (31a, 31b) are adapted so that can provide closure of the interior in a sealed manner to the ambient atmosphere.

In particular, at least the discharge passageway (31b) can have an adapted perimeter, for example with a rim of rigid material, so that can be releasably engaged with a first outlet connection end, for example a conduct of circular section.

Both the loading (31a) and discharging (31b) passageways can be provided on the same side of the casing (32).

The loading and discharging passageways (31a, 31b) can present a characteristic dimension (D) of between 50 and 500 mm, preferentially between 100 and 400 mm.

The supply container (3) can present a loading passageway (31a) having a characteristic dimension (Dₐ) greater than the characteristic dimension (D_{b}) of the discharge passageway (31b), so that can provide a greater flow, in this case of loading.

In the case of the embodiment of Figure 9, the supply container (3) includes a container part and a lid part, the loading passageway (31a) is provided in the form of a lid that can be sealingly retained in the passageway shaped by the cross section of a container part. The discharge passageway (31b) is provided in the lid.

In the case of the embodiment of Figure 10, the loading (31a) and discharging (31b) passageways are provided on opposite faces, in particular on the top face and on the base face, in particular with the first one arranged on the face of top, and the second on the base face.

Furthermore, the loading (31a) and discharging (31b) passageways can retain flow regulating devices (310a, 310b), for example of the one-way valve type, so that the flow can only flow in one respective direction. Said flow regulating devices (310a, 310b) can be adapted so that can be actuated to an open position, and return to closing in case of non-actuation.

According to a particular aspect of the present invention, at least the discharge passageway (31b) can retain a flow regulating device (310b), adapted so that only provides a flow passage in the case of the data means (34) associated with the supply container (3) receive an access validation from proximity data means (5) and/or remote data means (20).

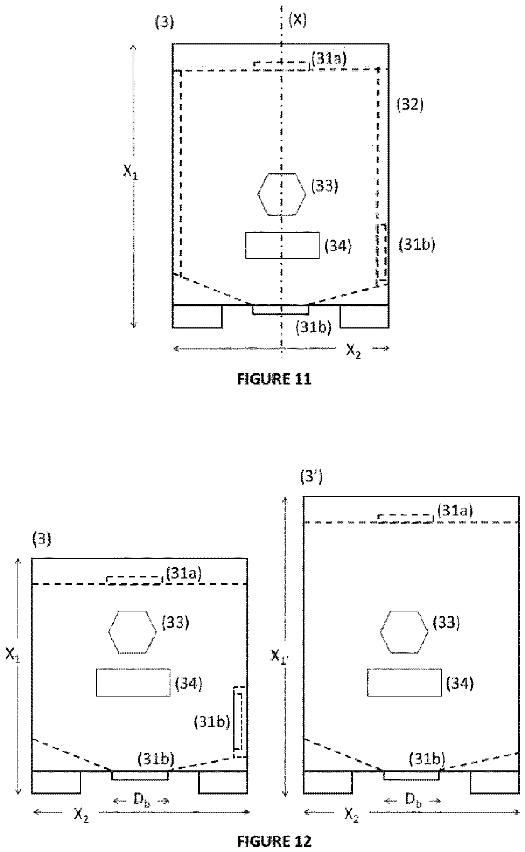

Alternatively, the loading passageway (31a) can be provided on an upwardly oriented side and the discharge passageway (31b) can be provided in a region close to the base wall, or in the base wall, of the casing (32) as shown in Figure 11.

In the case of two discharge passageways (31b) it is preferred when these are adapted so that can be connected to different types of discharge means (7; 71, 72).

As shown in Figure 12, the system according to the present invention can present at least two types of supply containers (3, 3') having at least one different dimension, for example their height (X₁, X_{1'}), whereby it is advantageous when they present loading/discharging passageways (31a, 31b) with similar characteristic dimensions (Dₐ, D_{b}).

The containers (3, 3') can be provided with a casing in a metallic or in a composite material, preferentially in a compostable one, preferentially with at least part of the interior surface with "food grade" finish, and so that an inert atmosphere can be generated and maintained inside. In particular, the containers (3, 3') can present a casing (32) with a wall thickness thereof being at least 0.5 mm, preferentially at least 1 mm, and at most 5 mm, of a preferred mode at most 3 mm.

As mentioned above, according to a particularly advantageous aspect of the invention, the supply containers (3) can present displacement means (30), for example in the form of a structure associated with a train of at least three or four wheels, so that can be moved, for example off-board and on-board of a transport vehicle (1), over a passageway or indoors.

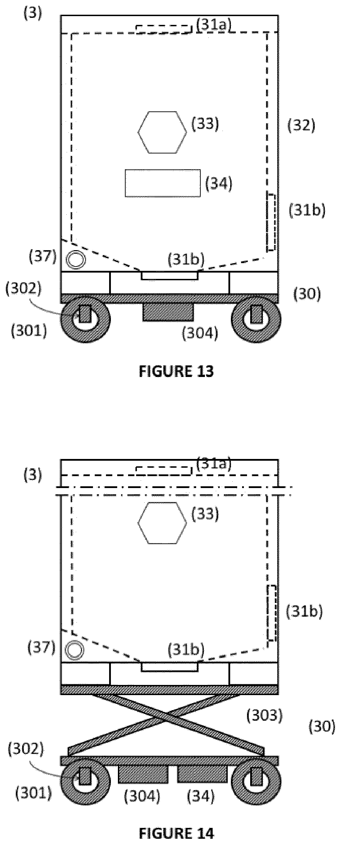

In the case of the embodiment shown in Figures 13 and 14, the displacement means (30) are specifically configured for only one type of supply container (3), so that cannot be used for other purposes.

The displacement means (30) can be removably associated with a supply container (3), and be adapted so that can provide displacement in at least one of: linear and rotational movement, and at least two spatial planes orthogonal to each other, for example on a floor and in elevation above it.

In particular, the displacement means (30) can present a support structure with a base of dimension at least approximately similar to the dimension of the base region of the supply container (3) .

In this particular, it is preferred when the displacement means (30) include at least one of:
- means for associating and retaining the supply container (3) configured so that can be transported in a standing position, preferentially retained in the base region;
- omnidirectional bearing means (301) adapted so that the supply container (3) can travel in an orthogonal path and rotate around itself;
- actuation means (302), for example of the electric motor type, adapted so that can actuate the bearing means (301);
- lifting means (303) of the supply container (3) to different heights;
- spatial orientation and navigation means adapted so that the supply container (3) can circulate semi-autonomous or autonomously.

The actuation means (302) can be configured, in particular with a base portion of similar size, so that can be individually associated with respective bearing means (301).

The displacement means (30) can further present respective energy means, including energy storage means (304) that may be associated with external energy sources, so as to provide at least one of: actuation means (302) and lifting means (303).

The energy means associated with the displacement means (30) can be further connected to the energy means associated with the supply container (3) via respective energy connections, in particular electrical connections, so that the displacement means (30) can provide energy to consumers of the supply container (3), such as to its data means (34).

In the case of a preferred embodiment, the displacement means (30) also present data means (34) uniquely associated with a particular supply container (3).

In particular, the displacement means (30) can be configured so that the supply containers (3) can circulate autonomously, or under control by means of a respective data communication interface or a user interface.

Figures 15 and 16 represent examples of connecting supply containers (3) to discharge means (7) at the consumption location, in order to supply beverage preparation apparatuses.

In the case shown in Figure 15, a discharge passageway (31b) of the supply container (3), for example on a side wall thereof, can be connected to an actionable discharge device (71), for example of the tap or valve type, that can be operated manually.

The discharge of a certain quantity of coffee can be carried out whenever and according to the needs identified by a user and, for example, to a feeding container (8) configured so that can be associated in supply connection to roasting means (11) and/or grinding means (12).

Alternatively, as shown in Figure 16, a discharge passageway (31b) of the supply container (3) can be connected to a supply connection (72), for example of the flow conduct type, with actuation of the outflow by means of impulsion thereof, including by hydraulic means in the case of a fluid coffee derivative, such as with hydraulic pump type devices, or by pneumatic means in the case of a granulate or powder, such as air compressor or fan type devices, driven by power means (6) associated and preferentially regulated by data means (5) associated with the beverage preparation apparatus.

In this way, an automatic discharging actuation according to the instructions for regulating the apparatus is advantageously provided.

Furthermore, the process of operating the supply container (3) includes moving it to an operative discharge position (I), in particular a predefined position, where can be carried out the connection of the discharge passageway (31b) to discharge means (7; 71, 72).

It is advantageous when the operative discharge position (I) can be apprehended by at least one of: container data means (34) and first apprehension means (51) functionally associated with proximity data means (5V).

The operative discharge position (I) can correspond to a position where the supply container (3) is at least partially collected above, below or inside a structural collection arrangement, for example in the form of a cupboard. It is preferred when a front face (F) of the container is in this case oriented towards the access side of said collection frame arrangement.

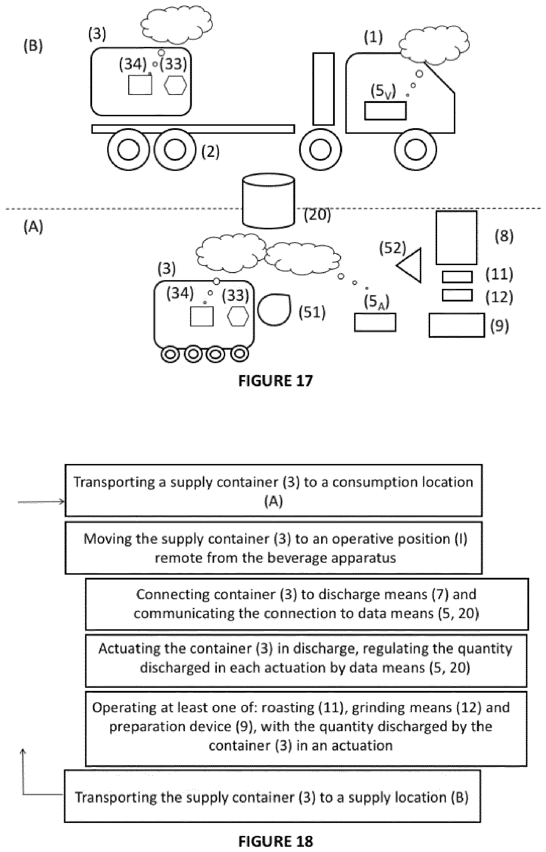

Figures 17 to 22 represent processes and process parts according to the present invention.

The dispensing process comprises cycles that include loading the coffee beans into a supply container (3) at a supply location (B), and delivering a certain number of supply containers (3) to a certain number of consumption locations (A), whereby the supply containers (3) are then returned to a supply location (B) where they can be refilled, and thereby start a new distribution cycle.

In particular, the process may include determining a number of supply containers (3) to be supplied to each of certain consumption locations (A) in a region, among a plurality of consumption locations (A) geographically distanced from each other, and to include along a delivery route by a transport vehicle (1), determined by optimization analysis based upon data obtained from remote data means (20), for example once a day, including data received from data means (5) operating at each consumption location (A) associated with beverage preparation apparatuses.

According to the present invention, and as schematically represented in Figure 18, the supply containers (3) can present data means (34) adapted so that can communicate with proximity data means (5), through wireless data connection, in particular short range, such as of WIFI type, or similar.

If the supply containers (3) are on-board the transport vehicle (1), it can be a data link with the proximity data means (5_{V}), in this case associated with the transport vehicle (1).

In case that the supply containers (3) are located at a consumption location (A), it can be via a data connection with proximity data means (5A) provided at the consumption locations (A), for example operatively connected to beverage preparation apparatuses.

It is further advantageous when said data connection between supply containers (3) and proximity data means (5; 5V, 5A) includes a prior validation protocol, for example of the "hand-shake" type, or similar.

According to the present invention, a data connection can be further established, at least at the consumption location (A), between the supply containers (3) and remote data means (20) via the proximity data means (5A).

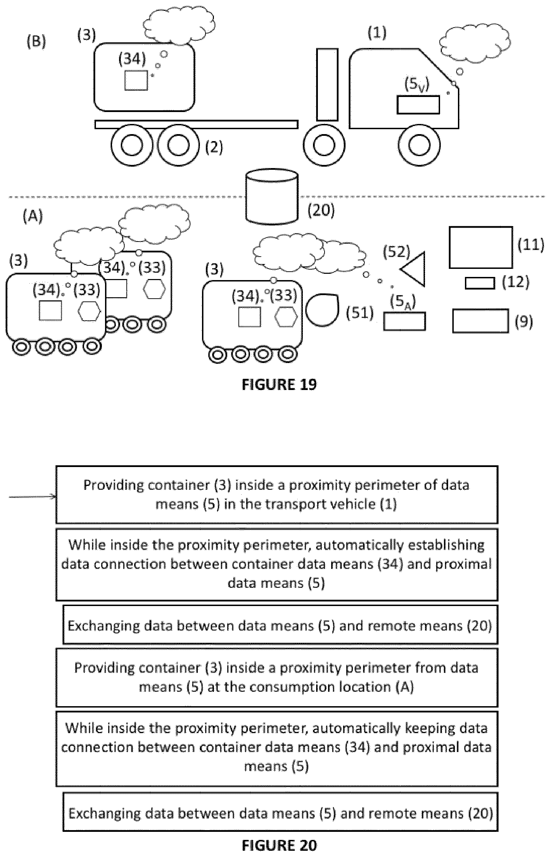

As shown in Figures 19 and 20, the data means (34) associated with supply containers (3) can be adapted so that can operatively connect with proximity means (5; 5v, 5A) as soon as inside a perimeter of proximity to these, and as long as they remain within this perimeter.

In particular, the proximity means (5; 5v, 5A) can thus contribute to establishing a connection between the data means (34) associated with the supply container (3) and the remote data means (20).

The possibility is thus advantageously provided to maintain a functional connection between data means associated with each supply container (3) and remote data means (20) throughout each distributing cycle, provided that the supply container (3) leaves a supply location (B) and until being returned to one, including while in the proximity of data means (5v) associated with the transport vehicle (1) and in proximity of data means (5A) associated with a consumption location (A).

This connection between data means (34) associated with the supply container (3) and proximity data means (5) associated with the consumption location(A), for example with beverage preparation apparatuses, can advantageously be further used to validate the disposition of a new supply container (3) in an operative discharge position (I).

The system may include first apprehending means (51), for example image sensors, adapted so that can apprehend a unique identification associated with the supply container (3) in the event that the latter is in operative discharge position (I), and communicate this event to proximity data means (5A).

In addition, the system can further include second apprehension means (52), for example actuation sensors, associated with different devices of the beverage preparation apparatus, and configured so that communicate with the proximity data means (5A).

In this way the possibility is provided for the proximity data means (5A) to regulate the discharge actuation of the supply container (3) according to operating data of each beverage preparation cycle, in particular each supply cycle of beverage preparation device (9).

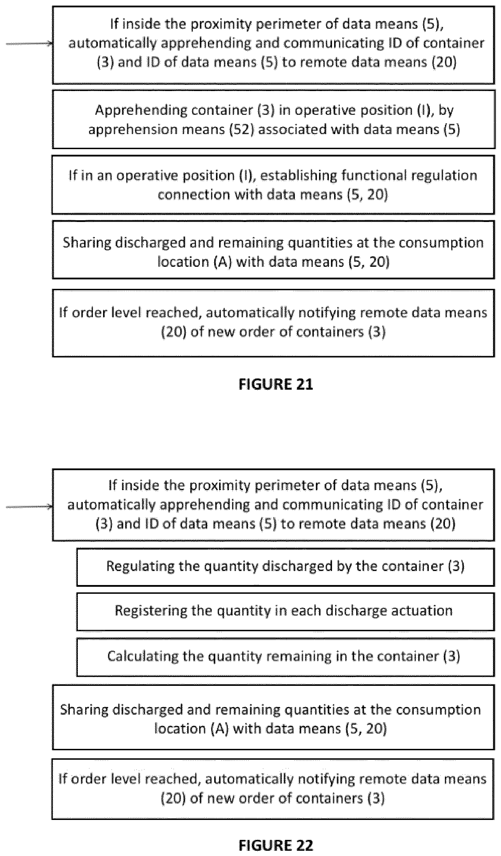

In the case of the embodiment shown in Figure 21, there is also considered the possibility of determining the evolution over time of the total amount of coffee bean, or substance derived therefrom, available at the consumption location (A). In case of reaching a previously defined level of this total quantity, then an order can be automatically generated for a given quantity of supply containers (3).

As further represented in Figure 22, the operation of the supply container (3) in discharge may further include the automatic apprehension of an ID of the supply container (3), for example by reading information means (33) thereof by first apprehending means (51) .

Furthermore, the discharge operation can be performed through a plurality of actuations of discharge means (7) or associated power means, whereby it is advantageous when there is provision of at least one of: data means (34) associated with the supply container (3) and proximity data means (5A) that can regulate the amount discharged by the container.

This regulation can be made in accordance with operating parameters of the beverage preparation apparatus grasped by second apprehension means (52).

Alternatively, this regulation can be made according to a selection entered through a user interface associated with a beverage preparation apparatus.

In addition, the amount of coffee beans discharged at each discharge operation can be recorded, and the amount remaining in the supply container (3) calculated.

## Claims

1. System for distributing coffee to consumption locations (A) including a beverage preparation apparatus, said system comprising a reusable supply container (3) for coffee beans, or substance derived thereof, and presenting a container passageway (31) in the casing (32) thereof,
**characterized**
**in that** the supply container (3) is adapted so that can be provided in an operative discharge position (I) wherein a container passageway (31) can be releasably connected to discharge means (7) that provide flow connection of the supply container (3) remote relative to the beverage preparation apparatus.

2. System according to claim 1, **characterized**
**in that** the supply container (3) presents at least one container passageway (31) adapted so that can be operated in discharge, preferentially in sealed manner to ambient atmosphere, according to at least one of:
- so that can be removably engaged with discharge means (7), including at least one of: actionable discharge device (71), for example discharge tap or valve, and supply connection (72), for example of the flow conduct type;
- so that a flow regulating device (310) associated with the container passageway (31), for example of a valve type or the like, can be actuated and provide flow through the container passageway (31) accordingly;
- so that the flow can be actuated with the contribution of at least one of: electrical power means (6), for example associated with pneumatic-type flow impulse means, and gravity force.

3. System according to claim 1 or 2, **characterized in that** the supply container (3) presents only one container passageway (31) adapted so that can provide coffee loading and discharging, or
**in that** the supply container (3) presents at least two passageways (31a, 31b) each one adapted only for loading and discharging respectively,
whereby at least one container passageway (31), preferentially at least the discharge passageway (31b), presents a characteristic dimension (D), for example diameter, that is at most 500, preferentially at most 300, particularly preferentially at most 20%, of the smallest of the characteristic dimensions (X₁, X₂, X₃) of a respective face of the casing (32).

4. System according to claims 1 to 3, **characterized in that** the supply container (3) presents passageways (31a, 31b) adapted for loading and discharging, and with similar or different characteristic dimensions (Dₐ, D_{b}), whereby the characteristic dimension (Dₐ) of the one for loading is preferentially larger that the characteristic dimension (D_{b}) of the one for discharging, and
whereby the supply container (3) presents at least one container passageway (31) in at least one of: the top region and the base region thereof, whereby said container passageway (31) is preferentially arranged aligned with, particularly preferentially offset relative to, a central axis (X) of the supply container (3), and oriented in a direction similar to that of the force of gravity, whereby said loading and discharging passageways (31a, 31b) are preferentially provided on at least one of: on the same face, on different faces and/or on relatively opposite positions of the supply container (3), including at least one of: on a top face and a base face; in a top region and in a base region of a side face; in a combination of these.

5. System according to any of previous claims 1 to 4, **characterized**
**in that** the supply container (3) presents passageways (31; 31a, 31b) that present at least one of:
- a region with a rigid or semi-rigid perimeter, whereby the supply container (3) preferentially presents at least part of the casing (32) rigid, for example in a metallic material or in a composite material, in particular in a material that is gas diffusion sealing and opaque to UV transmission;
- a portion configured in a collar-like shape, for example a projection relative to the vicinity, and so that can support at least one of: the retention of a flow regulation device (310) and the connection with discharge means (7);
- occupy only part of a face of the casing (32), preferentially a smaller part of the face of the casing (32), whereby it is preferred when at least one of the faces that presents a passageway (31a, 31b) also presents a collar that projects along the perimeter region of the container face at least at the height of the passageway (31a, 31b),
- at least one discharge passageway (31b) is provided in a base region oriented downwards, or in a lateral region close to the base region, and at a distance of at least 20 cm, preferentially at least 40 cm from the floor.

6. System according to any of claims 1 to 5, **characterized in that** the supply container (3) presents at least one of:
- a first characteristic dimension (X₁), for example height, that is greater than 0.3 m, preferentially greater than 0.5 m, and still preferentially less than 1.5 m, particularly preferentially less than 1.2 m;
- at least one second characteristic dimension (X₂, X₃), for example width or depth, that is greater than 0.3 m, preferentially greater than 0.5 m, and still preferentially less than 1 .5 m, particularly preferentially less than 1.0 m;
- a ratio between a first and at least a second characteristic ratio (X₁/X₂) of less than 3, preferentially less than 2, particularly preferentially less than 1.6;
and
**in that** the system comprises at least two types of supply containers (3, 3') that differ in at least one of: at least one characteristic dimension (X₁, X₂, X₃) of the casing (32), collection volume, casing material, general configuration, but preferentially present at least one discharge passageway (31a; 31b) of similar characteristic dimension (D).

7. System according to any of claims 1 to 6, **characterized in that** the supply container (3) presents at least one container passageway (31) with a characteristic dimension (D), for example diameter, of at least 5 cm, preferentially at least 10 cm, whereby a discharge passageway (31b) preferentially presents a characteristic dimension (D_{b}) smaller than a loading passageway (31a), whereby the characteristic dimension (D) of at least one passageway (31) preferentially does not exceed 10%, particularly preferentially does not exceed 5% of the characteristic dimension, in particular a transverse dimension, of a respective face of a supply container (3),
whereby the supply container (3) may present a loading passageway (31a) with a characteristic dimension (Dₐ), for example diameter, similar to the characteristic dimension, in particular a transverse dimension, of a respective face of a supply container (3), and a discharge passageway (31b) with a smaller characteristic dimension (D_{b}), the loading passageway (31a) being provided by a lid-like element of the supply container (3), and whereby the discharge passageway (31b) is provided on said lid-like element of the supply container (3).

8. System according to any of claims 1 to 7, **characterized in that** the supply container (3) presents at least one of:
- a loading passageway (31a) adapted so that can only be opened in case of use of at least one of: a respective tool, association with a respective electromagnetic medium or a respective electronic input,
- a discharge passageway (31b) comprising a flow regulation device (310b) adapted so that only provides a passageway of coffee from the inside to the outside, and not from the outside into the supply container (3),
whereby it is preferred when at least the loading passageway (31a) has tampering evidence means configured so that can be recognized by a user, and
whereby it is preferred when said flow regulation device (310b) only provides passage of coffee in case it is subjected to at least one of: an upstream pressure value greater than a predetermined pressure value, association with respective electromagnetic means or respective electronic input.

9. System according to any of claims 1 to 8, **characterized in that** the supply container (3) presents at least one of:
- a continuous collection volume greater than 0.002 m³, preferentially greater than 0.005 m³, whereby it is further preferred when it is less than 0.01 m³, preferentially less than 0.05 m³, and
- a total weight when fully loaded with coffee, greater than 10 kg, preferentially greater than 20 kg, whereby it is further preferred when the total weight is less than 100 kg, preferentially less than 80 kg,
whereby it is preferred when the supply container (3) presents a casing (32) configured so that provides at least one of:
- the arrangement of two supply containers (3) with at least 500, preferentially at least 800, of their faces directly adjacent,
- stacking at least two supply containers (3), preferentially at full load, one on top of the other;
- the base region corresponds to at least 500, preferentially at least 800, of the vertical projection of the outer perimeter of the casing (32) on the floor.

10. System according to any of claims 1 to 9, **characterized in that** the supply container (3) presents or can be associated with displacement means (30) adapted so that can carry only one, or at most four supply containers (3), and that can be actuated by at least one of: human means and other means, for example electromechanical means, whereby it is preferred when said displacement means (30) include at least one of:
- means for associating with the supply container (3) configured so that the latter can be transported in a standing position, preferentially retained in the base region thereof;
- omnidirectional bearing means (301) adapted so that the supply container (3) can travel in an orthogonal path and rotate around a vertical axis thereof;
- actuation means (302), for example of the electric motor type, adapted so that can actuate the bearing means (301);
- lifting means (303) adapted so that can elevate the supply container (3) to different heights;
- spatial orientation and navigation means adapted so that the supply container (3) can circulate semi-autonomously or autonomously.

11. Process for distributing coffee to the consumption locations (A) geographically distanced from each other, **characterized in that** the process comprises successive cycles of dispensing a load of coffee beans, or substance derived thereof, in supply containers (3), each cycle including the following steps:
- loading a supply container (3) at a supply location (B) with a load of coffee beans, or substance derived thereof;
- transporting the supply container (3) to a first consumption location (A);
- arranging the supply container (3) in a previously defined discharging operating position (I) remote from a beverage preparation apparatus;
- establishing connection between a passageway (31) of the supply container (3) and discharge means (7; 71, 72);
- operating the supply container (3) in discharge, so that can supply at least one of: roasting means (11), grinding means (12) and beverage preparation device (9) associated with at least one beverage preparation apparatus;
- monitoring the evolution over time of at least one of: quantity discharged from the supply container (3) in the discharging operative position (I), and discharged condition, supply containers (3) in discharge or for discharge at the consumption location (A);
- transporting the supply container (3) back to a supply location (B).

12. Process according to claim 11, **characterized in that** the disposition of the supply container (3) in an operative discharge position (I) includes at least one of:
- moving the supply container (3) by displacement means (30) over the floor to the discharging operative position (I);
- lifting the supply container (3) by displacement means (30) to a previously defined position, and pushing it to a discharging operative position (I) in a respective structural support arrangement;
- apprehending the presence of the supply container (3) in the discharging operative position (I) and sharing a respective signal with proximity data means (5A);
and
**in that** the arrangement of the supply container (3) in a discharging operative position (I) does not include manually manipulating or lifting the supply container (3) by weight more than 1 m above the floor.

13. Process according to claims 11 or 12, **characterized in that** the process further includes at least one of the following steps:
- assigning a unique identification to each supply container (3), associated with information means (33) thereof preferentially configured so that can be automatically apprehended;
- providing operative connection of at least one of: discharge means (7) and power means (6), to proximity data means (5A) associated with beverage preparation apparatus;
- apprehending information means (33) associated with and uniquely identifying the supply container (3), in particular through first apprehending means (51) associated with the proximity data means (5);
- communicating the unique identification of the supply container (3) to remote data means (20).

14. Process according to claims 11 to 13, **characterized in that** the process includes at least one of the following steps:
- inputting reference data into a data record associated with a consumption location (A), including at least one of: georeference and reference of proximity data means (5A) operated at said consumption location (A);
- automatically establishing a functional connection between data means (34) associated with each supply container (3) that is within a predefined proximity perimeter with respect to proximity data means (5);
- monitoring the evolution in time of the discharge of the coffee, from the supply container (3) until completion thereof;
- monitoring the evolution in time of at least one of: number and type of supply containers (3) at the consumption location (A);
- periodically processing, for example in periods of once a day or once per hour, the total amount of coffee available at the consumption location (A).

15. Process according to claims 11 to 14, **characterized in that** the process can also include the following steps:
- sending an automatic notification to remote data means (20), after a previously defined level of total load has been reached in supply containers (3) at the consumption location(A), or similar parameter;
- optionally, waiting for a validation notification from proximity data means (5A) referenced to the consumption location (A);
- send an automatic order notification to remote data means (20), of a quantity of supply containers (3) that has been previously determined or calculated based on historical analysis and demand forecast, to be supplied to the consumption location (A);
- sending to the proximity data means (5A) a notification of prediction of delivery of supply containers (3).

16. Process according to claims 11 to 15, **characterized in that** the operation of the supply container (3) on discharge is carried out if and after at least one of:
- receiving an instruction transmitted from remote data means (20),
- assessing identification data of container (3) associated with information means (33), apprehended by first apprehending means (51) and assessed by at least one of: proximity data means (5A) and remote data means (20), and **in that** the quantities of coffee available at a consumption location (A), including in at least one of: supply container (3) and supply means (8), is transmitted from time to time, for example a measure of weight or volume, to the remote data means (20), that is preferred when also at least one of: the number of operating cycles of the beverage preparation device (9) and the amount of coffee supplied in each of these it is transmitted from time to time to the remote data means (20).
